(19) Europäisches Patentamt
European Patent Office
Office européen des brevets

(11) **EP 1 491 886 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*G01N 29/22* (2006.01)    *G01N 29/04* (2006.01)
*G01B 17/02* (2006.01)    *G01H 5/00* (2006.01)
*G01B 17/00* (2006.01)

(21) Anmeldenummer: **03014068.5**

(22) Anmeldetag: **23.06.2003**

(54) **Vorrichtung und Verfahren zur Kalibrierung und Ultraschallvermessung von zylindrischen Prüfmustern**

Apparatus and method for calibration and ultrasound inspection of cylindrical bodies

Appareil et procédé pour l'étalonnage et inspection ultrasonique des echantillons cylindriques

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**29.12.2004 Patentblatt 2004/53**

(73) Patentinhaber: **ZUMBACH ELECTRONIC AG**
**CH-2552 Orpund (CH)**

(72) Erfinder:
• **Merki, Hubert A.**
**Brewster NY 10509 (US)**
• **Naegeli, Sven**
**Putnam Valley NY 10579 (US)**
• **Daleo, James**
**Brewster NY 10509 (US)**

(74) Vertreter: **Köster, Hajo et al**
**propindus**
**Patentanwälte**
**NIEDMERS JAEGER KÖSTER**
**Pippinplatz 4a**
**82131 Gauting bei München (DE)**

(56) Entgegenhaltungen:
DE-A- 3 939 328        US-A- 4 114 456
US-A- 4 254 660        US-A1- 2002 134 159

**Beschreibung**

Die Erfindung betrifft eine Vorrichtung zur Ultraschallvermessung von rohrförmigen und schlauchförmigen Prüfmustern, die mit Wasser gefüllt oder in ein Wasserbad getaucht werden kann und mit mindestens einem an der Vorrichtung gehaltenen Ultraschallmesskopf und einem zylindrischen Hilfsdorn ausgestattet ist, und ein entsprechendes Verfahren.

Rohre und Schläuche aus Kunststoff oder Metall werden üblicherweise durch Extrudieren hergestellt. Dazu wird das Kunststoffmaterial oder das Metall durch eine Matrize bzw. Düse gepresst, welche die Dimension des extrudierten Produktes bestimmt. Verschiedene Faktoren, beispielsweise Temperatur, Druck, Massefluss, Abzugsgeschwindigkeit und Einrichtfehler der Extrudiervorrichtung, um nur einige zu nennen, beeinflussen die Qualität des Endproduktes und führen beispielsweise zu Abweichungen in der Querschnittsgeometrie.

Es sind nun bereits verschiedene Methoden bekannt, um die extrudierten Produkte, sei es in der Linie oder sei es anhand von Prüfmustern im Prüflabor, zu vermessen. Im Labor werden dabei vor allem mechanische Mikrometer und optische Messgeräte eingesetzt.

Bei den optischen Messgeräten werden häufig Profilprojektoren eingesetzt, bei welchen der Schatten des zu vermessenden Querschnittsmusters auf einen Schirm projiziert wird und so vermessen werden kann.

Aus der DE 33 03 637 A1 ist eine Vorrichtung zur Messung der Querschnittsabmessungen an hohlzylindrischen Werkstücken bekannt, bei der eine zu messende Probe des Werkstückes zu drei in einem gleichschenkligen Dreieck an der Wandung der Probe angeordnete Anschläge zentriert und zwei diametral gegenüberliegende Messsysteme auf der Mittelsenkrechten zur Verbindungstrecke der beiden anderen auf der Mittelsenkrechten zur Verbindungstrecke der beiden anderen Anschläge an der Außenwandung der Probe angeordnet sind. Der innenliegende Anschlag wird dabei durch einen rotierenden, zylindrischen Aufnahmedorn gebildet, der einen definierten Durchmesser und eine horizontale Mittelachse aufweist, wobei die Innenwandung der Probe linienförmig auf diesem Aufnahmedorn aufliegt.

Bei diesen bekannten Vorrichtung sind die Vorbereitungsarbeiten aufwendig, um die gewünschten Messergebnisse zu erhalten. Zudem können leicht Messfehler entstehen.

Es ist auch schon bekannt, die Wandstärke von Rohren und Schläuchen bzw. von hohlzylindrischen Werkstücken in der Produktionslinie oder im Prüflabor mit Hilfe der Ultraschallmessung zu bestimmen. So ist in der Firmendruckschrift "Tube Inspection System" der Firma Danish Atomic Energie Commission eine Messvorrichtung für Rohre beschrieben, mit der über zwei aneinander gegenüberliegende berührungslose Aufnehmer lediglich von außen die Wandstärke eines zu messenden Rohres mit Hilfe von Ultraschall ermittelt wird.

Für die Labormessung war die Vermessung mit Hilfe von Ultraschall jedoch zu ungenau, vor allem aufgrund der direkten Abhängigkeit der Messung von der Schallgeschwindigkeit des Materials und deren Temperaturabhängigkeit.

Bei einer Ultraschallmessung in der Linie wird das zu vermessende Werkstück normalerweise durch das Wasserbad hindurchgezogen. Ein derartiges, in der Linie eingesetztes Ultraschallpuls-Echotest-Meßsystem ist in der US-A-4 254 660 offenbart. Das Werkstück ist mit dem Ultraschallsender durch ein flüssiges Kupplungsmedium verbunden. Die Temperatur des Flüssigkeitsmediums beeinträchtigt dabei die präzise Vermessung des Werkstücks, da sich die Schallgeschwindigkeit in der Flüssigkeit mit der Temperatur ändert. Zur Bestimmung der Schallgeschwindigkeit werden ein Kalibrierdorn bekannten Durchmessers zusammen mit einem Hilfsreflektor eingesetzt. Der Kalibrierdorn wird nicht zu Vermessungszwecken eingesetzt, sondern zur Durchführung der Vermessung des Werkstücks entfernt.

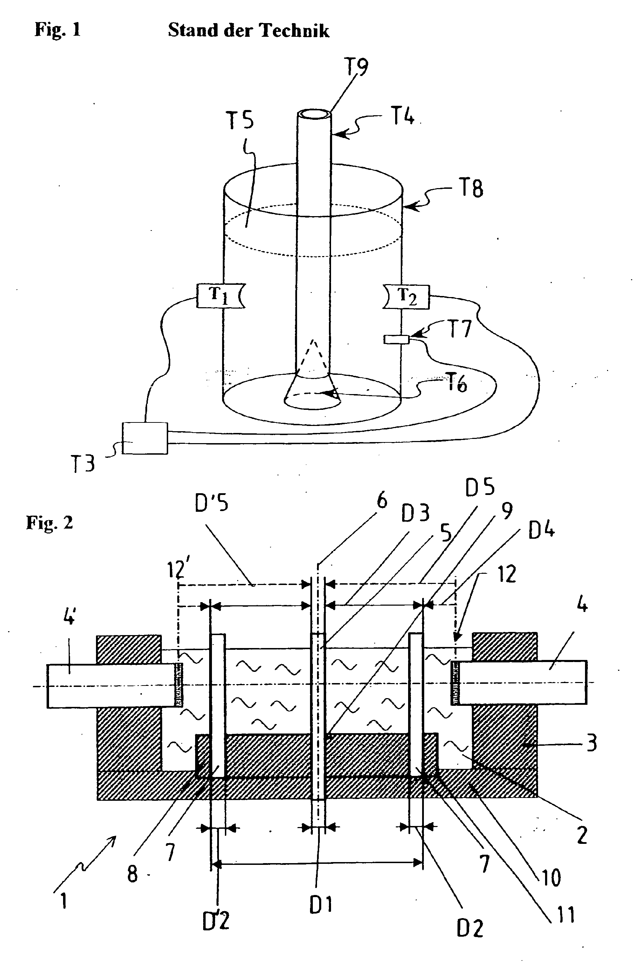

Aus der US-Patentanmeldung US 2002/0134159 A1 ist eine Vorrichtung und ein Verfahren zur Bestimmung der Wanddicke und der Schallgeschwindigkeit mit Hilfe von reflektierten Ultraschallimpulsen bekannt. Der Inhalt dieser veröffentlichten Patentanmeldung stimmt weitgehend überein mit den Darlegungen in dem wissenschaftlichen Artikel von Ping He "Simultaneous measurement of sound velocity and wall thickness of a tube" in Ultrasonics 39 (2001) 407-411, Elsevier Science B. V. Die dort beschriebene Vorrichtung ist in der Figur 1, auf die nachstehend noch näher eingegangen wird, dargestellt. Es wird vorgeschlagen, den Abstand der beiden für die Messung eingesetzten Ultraschallmessköpfe als Referenz zu verwenden. Es hat sich jedoch gezeigt, dass diese Referenz im Verhältnis unstabil ist. Für die unstabilen Reflektionen scheinen die gegenüberliegenden Messkopfflächen verantwortlich zu sein.

Auch die US-A 414,456 befasst sich mit der Ultraschallvermessung von bewegten Werkstücken. Dabei wird ein Ultraschallemitter/Empfänger-System zusammen mit einem Hilfsreflektor eingesetzt und auf einem Drehkopf um das Rohr rotiert, welches sich dabei kontinuierlich vorwärts bewegt. Auf diese Weise beschreibt der Ultraschallstrahl eine Helixform auf der Oberfläche des untersuchten Werkstücks.

Erfindungsgemäß wird die Ultraschallmessung ebenfalls mit Wasser als Kopplungsmedium durchgeführt. Das Prüfmuster wird zu diesem Zweck in ein Wasserbad eingetaucht, in dem sich auch zumindest Teile, beispielsweise die Ultraschallmessköpfe, der Messvorrichtung befinden.

Aufgabe der vorliegenden Erfindung ist es, eine Vorrichtung und ein Verfahren zur Ultraschallvermessung von zylindrischen Prüfmustern bereitzustellen, mit der bzw. mit dem es möglich ist, mehrere Parameter des Prüfmusters gleichzeitig und mit höherer Genauigkeit als bisher bestimmen zu können.

Gelöst wird diese Aufgabe durch eine Vorrichtung gemäß der Lehre des Anspruchs 1.

Bei der erfindungsgemäßen Vorrichtung und bei dem erfindungsgemäßen Verfahren wird die Ultraschallmessung eingesetzt, die allgemein bekannt ist. Ein Ultraschall wird an der Grenzfläche von zwei Medien entweder reflektiert oder er durchdringt diese Grenzfläche. Bei der Ultraschallvermessung wird die Laufzeit eines Ultraschalls von der Abgabe eines Ultraschallsignals am Ultraschallmesskopf bis zum Empfang des an einer Grenzfläche reflektierten Ultraschallechos bestimmt. Halbiert man diesen Zeitwert, dann erhält man die Laufzeit dieses Ultraschallsignals vom Ultraschallmesskopf zur Grenzfläche, an der die Reflektion stattgefunden hat. Der im Rahmen der vorliegenden Unterlagen benutzte Ausdruck "Laufzeit" stellt diesen Zeitwert dar. Eine Ultraschallmessung ist somit immer eine Distanzmessung zwischen Grenzflächen von zwei oder mehreren Medien. Bei der Ultraschallmessung wird die Laufzeit pro Medium erfasst. Multipliziert man diese mit der Schallgeschwindigkeit, dann erhält man die Dicke der entsprechenden Schicht.

Die erfindungsgemäße Vorrichtung zur Ultraschallvermessung besitzt einen Halter für mindestens einen Ultraschallmesskopf. Die erfindungsgemäße Vorrichtung kann beispielsweise als topfförmiges Behältnis ausgebildet sein, wobei mindestens ein Ultraschallkopf in der Seitenwand angeordnet und gehaltert ist. Das zu vermessende Prüfmuster befindet sich dann im Inneren dieses "Topfes", der mit Wasser gefüllt ist. Das Wasser stellt das Kopplungsmedium für den Ultraschall dar. Es ist auch möglich, die erfindungsgemäße Vorrichtung in ein Wasserbad oder ähnliches einzutauchen und die Ultraschallmessköpfe auf beliebige Art und Weise zu haltern.

Die erfindungsgemäße Vorrichtung zeichnet sich unter anderem durch einen zylindrischen Referenzdorn aus, dessen Längsachse zumindest im wesentlichen und vorzugsweise exakt mit der Messachse der Vorrichtung zusammenfällt. Dieser Referenzdorn ist ausreichend kleiner als der kleinste Innendurchmesser des zu vermessenden Prüfmusters. Der Durchmesser des Referenzdornes ist bekannt und kann auf geeignete und bekannte Weise ermittelt werden, beispielsweise durch eine optische Messung und auch durch eine mechanische mit einer Schiebelehre oder ähnlichem. Die Messachse stellt die Mittelachse der erfindungsgemäßen Vorrichtung zur Ultraschallvermessung dar. Beim Vermessen des Prüfmusters, worauf nachstehend näher eingegangen wird, sollte dieses möglichst derart zentriert und ausgerichtet werden, dass die Längsachse des rohrförmigen bzw. zylindrischen Prüfmusters mit der Messachse zusammenfällt. Zusätzlich zum Referenzdorn zeichnet sich die erfindungsgemäße Vorrichtung dadurch aus, dass sie mindestens einen zylindrischen Hilfsdorn aufweist, der sich parallel zum Referenzdorn erstreckt. Vorzugsweise ist der Durchmesser dieses Hilfsdorns auch bekannt oder kann auf übliche Weise genau bestimmt werden. Sowohl Referenzdorn als auch Hilfsdorn stellen dabei Vollstäbe dar und haben vorzugsweise den gleichen Durchmesser.

Der Hilfsdorn dient zusammen mit dem Referenzdorn zur Kalibrierung der erfindungsgemäßen Vorrichtung, denn die Messgenauigkeit einer Vorrichtung zur Ultraschallvermessung ist abhängig von der vorgenommenen Kalibrierung. Es besteht nämlich das Problem, dass der Ursprung der Schallwelle in einem Ultraschallmesskopf geometrisch nicht genau bestimmbar ist. Daher muss eine spezielle Kalibrierung bzw. ein spezielles Eichprocedere vorgenommen werden. Mit Hilfe der erfindungsgemäßen Vorrichtung ist eine derartige genaue Kalibrierung möglich.

Zum Zwecke der Kalibrierung wird der Hilfsdorn in eine Position zwischen dem Ultraschallmesskopf und dem Referenzdorn gebracht. Dann werden die nachstehen näher beschriebenen Kalibriermessungen vorgenommen.

Zur Vermessung des Prüfmusters wird dann der Hilfsdorn entfernt und das Prüfmuster auf den Referenzdorn derart aufgeschoben, dass die Längsachse des Prüfmusters mit der Messachse und auch der Längsachse des Referenzdornes möglichst zusammenfällt. Das Prüfmuster sollte dabei vollständig im Wasser eingetaucht sein, so dass auch der Innenraum des Prüfmusters mit Wasser gefüllt ist.

Nach einer bevorzugten Ausführungsform sind 2, 3, 4, 5, 6 oder mehr Ultraschallmessköpfe vorhanden. Zweckmäßigerweise ist die Zahl der Ultraschallmessköpfe eine gerade Zahl. Dabei stehen sich jeweils vorzugsweise zwei Messköpfe diametral bezüglich der Messachse gegenüber. Die Ultraschallmessköpfe werden zweckmäßigerweise in einer gemeinsamen Ebene ausgerichtet. Bei einer bevorzugten Ausführungsform sind 4 Ultraschallmessköpfe vorhanden, die in einem Winkel von 90° zueinander montiert und ausgerichtet sind. Zwei Ultraschallmessköpfe stehen sich somit jeweils paarweise auf einer Achse gegenüber, die senkrecht zur Messachse verläuft.

Die Ultraschallmessköpfe sind mit einem Signalprozessor verbunden, welche die gemessenen Signale auswertet und in Distanzen konvertiert.

Diese Messresultate können über eine geeignete Schnittstelle einem Rechner zugeführt werden.

Es ist möglich, die erfindungsgemäße Vorrichtung derart auszugestalten, dass sie nur mit einem Hilfsdorn ausgestattet ist, der zwischen alle vorhandenen Ultraschallmessköpfe und dem Referenzdorn bringbar ist. Vorzugsweise ist dazu der Hilfsdorn auf einer Kreisbahn um die Mittelachse verschwenkbar angeordnet. Dies kann beispielsweise dadurch realisiert werden, dass der Hilfsdorn in einer vorzugsweise scheibenförmigen Haltevorrichtung gehaltert wird, die in ihrem Zentrum eine durchgehende Bohrung zur Aufnahme des Referenzdornes besitzt und um den Referenzdorn und somit um die Mittelachse drehbar ist. Diese Haltevorrichtung kann natürlich auch mit mehreren Hilfsdornen versehen sein und wird nach der Kalibrierung aus der Vorrichtung entnommen.

Zum Vermessen des Prüfmusters wird dann eine Halterung mit einer durchgehenden Bohrung für den Referenzdorn auf diesen Referenzdorn aufgeschoben und in die Vorrichtung eingesetzt. Diese Halterung besteht vorzugsweise aus zwei Teilen, nämlich einer unteren und einer oberen Halterung, die in Längsschnittansicht in etwa Trapezform besitzen sowie rotationssymmetrisch sind. Mit anderen Worten, diese Halterungen besitzen in etwa die Form eines Kegelstumpfes und weisen in ihrem Zentrum die durchgehende Bohrung zum Aufschieben auf den Referenzdorn auf. Zudem werden diese Halterungen derart angebracht, dass die Kegelstümpfe zueinander zeigen und je nach Innendurchmesser des Prüfmusters in das Innere dieses Prüfmusters hineinragen. Dabei kommen die Enden des zylindrischen Prüfmusters gegen die schrägen Ebenen der Kegelstumpfform in Anlage und werden konzentrisch zur Mittelachse zentriert und ausgerichtet.

Mit der erfindungsgemäßen Vorrichtung können folgende Parameter von zylindrischen Prüfmustern, beispielsweise Rohren und Schläuchen, bestimmt werden: Außendurchmesser, Innendurchmesser sowie Mittelwert, Minimum, Maximum und Exzentrizität der Wandstärke der Wände.

Diese Parameter können durch einmaliges Eintauchen des Prüfmusters in Sekundenschnelle gleichzeitig ermittelt werden. Für die totale Wandstärke des Prüfmusters können Messgenauigkeiten in der Größenordnung von einigen Mikrometern erreicht werden.

Allerdings besteht die Problematik, dass der Reflektionspunkt an einem Zylinder abhängig ist von dessen Krümmungsradius und von der Abstrahlcharakteristik des Schalls vom Ultraschallmesskopf. Um diesen Effekt berücksichtigen zu können, sind entsprechenden Eichkurven nötig.

Es hat sich gezeigt, dass die Distanzmessungen in einem kleinen, jedoch für viele Anwendungen signifikanten Ausmaß, vom Radius des Prüfmusters beeinflusst wird. Die Distanzmessung zu einer ebenen Fläche wird als kürzer gemessen als dieselbe Distanz zu einem zylindrischen Prüfmuster. Die Beziehung entspricht dabei in etwa einer linearen Funktion zum Durchmesser des Prüfmusters.

Diese Charakteristik muss bei der Kalibrierung sowie bei der Messung berücksichtigt werden, um genaue Resultate erzielen zu können. Ein ähnliches Problem besteht, wenn die Distanz zu einer konkaven Fläche erfasst werden soll. In diesem Fall erscheint die Distanz kürzer.

Die durch unterschiedliche Radien bedingte Korrektur wird durch Ausmessen von verschiedenen Standards ermittelt, und zwar beginnend mit dem Referenzdorn als solchen bis zum maximalen Durchmesser, welche die erfindungsgemäße Vorrichtung für ein zu vermessendes Prüfmuster zulässt. Die Messdifferenzen werden erfasst und können in einer Tabelle oder in einer Formel ausgedrückt und bei einer Messung entsprechend berücksichtigt werden.

Gegenstand der Erfindung ist auch ein Verfahren zur Ultraschallvermessung von zylindrischen Prüfmustern, insbesondere Rohren und Schläuchen, in Wasser, bei dem man ein zylindrisches Prüfmuster mit einem Ultraschallsignal aus mindestens einem Ultraschallmesskopf in einer Vorrichtung zur Ultraschallvermessung vermisst. Bei diesem Verfahren wird als erstes eine Kalibrierung der Vorrichtung vorgenommen und dann das Prüfmuster vermessen.

Bei der Kalibrierung werden folgende Stufen durchgeführt:

a) In der Vorrichtung wird ein zylindrischer Hilfsdorn mit einem bekannten Durchmesser in eine Position zwischen dem Ultraschallmesskopf und einem zylindrischen Referenzdorn mit bekanntem Durchmesser, dessen Längsachse zumindest im wesentlichen mit der Messachse der Vorrichtung zusammenfällt, gebracht,

b) der Abstand D3 von der zum Ultraschallmesskopf zeigenden Außenmantelfläche des Hilfsdornes zur Außenmantelfläche des Referenzdornes wird auf per se bekannte Weise, beispielsweise mechanisch oder optisch, bestimmt, sofern dieser Abstand D3 nicht bekannt ist,

c) für den Abstand D5 vom Ultraschallmesskopf zum Referenzdorn wird in Wasser bei entferntem Hilfsdorn die Laufzeit für ein Ultraschallecho vermessen,

d) bei in der Position zwischen dem Referenzdorn und dem Ultraschallmesskopf befindlichem Hilfsdorn wird in Wasser die Laufzeit eines Ultraschallechos für den Abstand D4 vom Ultraschallmesskopf zur gegenüberliegenden Außenmantelfläche des Hilfsdornes vermessen und

e) unter Berücksichtigung der für die Abstände D4 und D5 gemessenen Laufzeitwerte und des Abstandswertes D3 wird der Abstand D5 von der Außenmantelfläche des Referenzdornes zum virtuellen Schallursprung im Ultraschallmesskopf rechnerisch als Bezugsstrecke D5 als Längenmaß ermittelt.

Bei der Vermessung werden folgende Stufen durchgeführt:

f) Unter Berücksichtigung der aus der Stufe e) bekannten Bezugsstrecke D5 des virtuellen Schallursprungs zum Referenzdorn wird die aktuelle Schallgeschwindigkeit des Wassers bestimmt, wenn sich keine Prüfmuster in der Messvorrichtung befindet,

g) das Prüfmuster wird derart in die Vorrichtung eingesetzt, dass es möglichst konzentrisch um den Referenzdorn umläuft,

h) für mindestens eine Grenzfläche des Prüfmusters wird für den Abstand dieser Grenzfläche zum virtuellen Schallursprung im Ultraschallmesskopf ein Ultraschallecho vermessen und

i) aus den ermittelten Daten wird mindestens ein gewünschter Parameter des Prüfmusters rechnerisch ermittelt.

Ist eine Vorrichtung einmal mit einem gegebenen Referenzdorn kalibriert worden, dann ist es normalerweise ausreichend, nur die Schritte f) bis i) durchzuführen. Bei dem ermittelten Parameter des Prüfmusters handelt es sich vorzugsweise um dessen Wandstärke.

Die Erfindung wird im folgenden anhand der beiliegenden Zeichnungen, welche eine erfindungsgemäße Vorrichtung schematisch und in nicht maßstabsgetreuer Weise wiedergeben, näher erläutert. In den Zeichnungen sind dabei gleiche Teile mit gleichen Bezugszeichen versehen. Von den Zeichnungen zeigen:

Figur 1    eine schematische perspektivische Ansicht einer aus der US 2002/0134159 A1 bekannten Vorrichtung zur Ultraschallvermessung eines zylindrischen Prüfmusters, insbesondere eines Rohres,

Figur 2    eine schematische Längsschnitt-Prinzipansicht einer erfindungsgemäßen Vorrichtung im Zustand der Kalibrierung,

Figur 3    eine der Figur 2 analoge Ansicht der dort gezeigten Vorrichtung im Zustand der Vermessung eines Prüfmusters,

Figur 4    eine schematische Prinzipaufsicht auf die in der Figur 2 gezeigte Vorrichtung mit 4 Ultraschallmessköpfen und mehreren Hilfsdornen und

Figur 5    eine der Figur 3 analoge Ansicht einer weiteren Ausführungsform mit einem in einer drehbaren Halterung gehaltenen Prüfmuster und mit nur einem Ultraschallmesskopf.

Die in der Figur 1 gezeigte Vorrichtung zeigt eine Messkammer zur Bestimmung der Wanddicke eines röhrenförmigen Objektes mit Hilfe einer Ultraschallvermessung. Diese Messkammer ist aus der US 2002/0134159 A1 bekannt und dort beschrieben.

Die bekannte Messkammer T8 (die Bezugszeichen, welche zur Erläuterung des Standes der Technik dienen, weisen einen "T" vor der eigentlichen Nummer auf) wird mit einem typischen Kopplungsmedium T5 gefüllt, bei dem es sich normalerweise um Wasser handelt. In die Messkammer T8 wird das zu vermessende rohrförmige Objekt T4 auf eine konusförmige Zentriervorrichtung T6 aufgesetzt, damit das rohrförmige Prüfmuster T4 zentrisch in der Messkammer T8 platziert wird. In die Messkammer T8 sind zwei einander diametral gegenüberliegende Ultraschallmessköpfe T1 und T2 eingebaut, die Ultraschallpulssignale aussenden und empfangen können. Mit Hilfe dieser beiden Ultraschallmessköpfe T1 und T2 wird die Wandstärke T9 des zu vermessenden rohrförmigen Prüfmusters T4 bestimmt. Die ermittelten Daten werden einer Elektronikeinrichtung T3 zugeführt und dort verarbeitet. Zu diesen Daten zählen auch die durch einen Temperaturfühler T7 ermittelten Temperaturdaten.

Figur 2 zeigt eine Längsschnittansicht durch eine erfindungsgemäße Vorrichtung zur Ultraschallvermessung von zylindrischen Prüfmustern. Die erfindungsgemäße Vorrichtung besitzt eine Messkammer 2, die mit Wasser gefüllt ist. Die Messkammer 2 besitzt eine umlaufende Seitenwand 3, in der diametral gegenüberliegend zwei Ultraschallmessköpfe 4, 4' angeordnet und gehaltert sind. Diese Ultraschallmessköpfe 4, 4' sind bekannter Art und Natur, so dass sich eine weitere Beschreibung erübrigt.

In der Messkammer 2 ist zentrisch zwischen den beiden Ultraschallköpfen 4, 4' ein zylindrischer Referenzdorn 5 angeordnet, dessen Längsachse mit der Messachse 6 der Vorrichtung 1 bzw. der Messkammer 2 zusammenfällt.

Dieser Referenzdorn 5 stellt einen Vollzylinder aus einem Metall dar. Der Durchmesser dieses Referenzdornes 5 beträgt einen bestimmten Wert, der mit D1 bezeichnet wird. Dieser Durchmesser D1 des Referenzdorns 5 ist genau bekannt und kann beispielsweise mechanisch oder auf andere Weise bestimmt werden.

Zwischen dem Ultraschallmesskopf 4 und dem Referenzdorn 5 ist fluchtend ein Hilfsdorn 7 angeordnet, bei dem es sich ebenfalls um einen Vollzylinder aus einem Metall mit einem genau bekannten Durchmesser D2 handelt, der sich parallel zum Referenzdorn 5 erstreckt und mit seinem unteren Ende in eine Haltevorrichtung 8 befestigt ist. Der Durchmesser des Referenzdornes 5 entspricht dabei dem Durchmesser des Hilfsdornes 7. Bei dieser Haltevorrichtung 8 handelt es sich um eine Scheibe, in deren Mittelpunkt bzw. Zentrum sich eine Bohrung 9 befindet, durch die hindurch sich der Referenzdorn 5 bis in eine Aufnahme im Boden 10 erstreckt. Der Referenzdorn 5 ist dabei im Boden 10 fixiert.

Die scheibenförmige Haltevorrichtung 8 ist in eine scheibenförmige Vertiefung 11 eingesetzt und kann nach oben aus der Vertiefung 11 und auch aus der Messkammer 2 herausgenommen werden, wobei der Referenzdorn 5 durch die Bohrung 9 hindurchgleitet.

In der einfachsten Form ist die erfindungsgemäße Vorrichtung 1 nur mit einem Ultraschallmesskopf 4 ausgestattet. Nach einer bevorzugten Ausführungsform weist die Vorrichtung 1 jedoch mindestens ein Paar von Ultraschallmessköpfen 4, 4' auf, die weiterhin bevorzugt diametral einander gegenüberliegend angeordnet sind, wie das in der Figur 2 gezeigt ist. In diesem Fall befindet sich der Referenzdorn somit mittig zwischen diesen beiden Ultraschallmessköpfen 4, 4', welche Ultraschallsignale bzw. Impulse in Richtung auf den Referenzdorn 5 abgeben können. Bei der in der Figur 2 gezeigten Vorrichtung 1 befindet sich auch zwischen dem zweiten Ultraschallmesskopf 4' und dem Referenzdorn 5 ein Hilfsdorn 7. Bei diesem Hilfsdorn 7 kann es sich um einen zusätzlichen Hilfsdorn 7 handeln, der ebenso ausgestaltet und ausgebildet ist, wie der oben beschriebene Hilfsdorn 7. In diesem Falle sind somit zwei Hilfsdorne 7 in die scheibenförmige Haltevorrichtung 8 eingesetzt. Es ist auch möglich, diese Haltevorrichtung 8 nur mit einem Hilfsdorn 7 auszustatten und diesen um die Messachse 6, und somit die Längsachse des Referenzdornes 5 auf einer Kreisbahn zu verschwenken, indem die Haltevorrichtung 8 um die Messachse 6 und somit dem Referenzdorn 5 gedreht wird.

Die Kalibrierung der erfindungsgemäßen Vorrichtung wird nachstehend unter Bezug auf den Ultraschallmesskopf 4 näher erläutert. Die Kalibrierung der anderen Ultraschallmessköpfe 4' etc. kann dann analog erfolgen, worauf nachstehend noch näher eingegangen wird.

Befindet sich der Hilfsdorn 7 zwischen dem Referenzdorn 5 und dem Ultraschallmesskopf 4, dann ist auch der Abstand bzw. die Strecke D3 bekannt, die sich aus dem Abstand der zum Ultraschallmesskopf 4 zeigenden Außenmantelfläche des Hilfsdornes 7 zur Außenmantelfläche des Referenzdornes 5 ergibt. Diese Strecke D3 kann ohne weiteres auf mechanischem Wege ermittelt werden. Alle mechanischen und somit auf einfache Weise bestimmbaren Abstände und Strecken D1, D2 und D3 sind in der Figur 2 mit durchgezogenen Linien dargestellt.

Bei der Kalibrierung wird dann als nächstes vom Ultraschallmesskopf ein Ultraschallsignal in Richtung auf den Hilfsdorn 7 ausgesandt, das reflektiert und vom Ultraschallmesskopf 4 empfangen wird. Das dabei erhaltene Signal bzw. die dabei erhaltene Laufzeit entspricht dem Abstand D4 und somit der Strecke von der zum Ultraschallmesskopf 4 zeigenden Außenmantelfläche des Hilfsdornes 7 zu diesem Ultraschallmesskopf.

Als nächstes wird dann der Hilfsdorn 7 entfernt und eine weitere Ultraschallmessung durchgeführt, um den Abstand D5 und somit die Strecke von der Außenmantelfläche des Referenzdornes 5 zum Ultraschallmesskopf 4 zu ermitteln. Die dabei erhaltene Laufzeit des Ultraschallechos entspricht diesem Abstand D5.

Sinn dieser Kalibrierung ist es, den exakten Abstand des virtuellen Schallursprungs 12 von dem Referenzdorn 5 zu ermitteln, denn dieser virtuelle Schallursprung 12 befindet sich im Ultraschallmesskopf 4, ist jedoch auf mechanischem Wege oder auf andere Weise nicht ohne weiteres bestimmbar.

Aus den mechanisch ermittelten Werten und den erhaltenen Ultraschallechos ist es nun durch einfache Dreisatzrechnung möglich, den exakten Abstand des virtuellen Schallursprungs 12 von der Außenmantelfläche des Referenzdornes 5 zu ermitteln, da der Abstand D3 feststeht und der Abstand D5 der Summe aus D3 und D4 darstellt. Für eine gegebene Vorrichtung bzw. für einen gegebenen Ultraschallmesskopf 4 steht dann der Abstand D5 fest, und zwar unabhängig von der Temperatur des Koppelmediums Wasser usw.

Die gleiche Kalibrierung wird dann für den anderen Ultraschallmesskopf 4' oder die weiteren Ultraschallmessköpfe vorgenommen.

Liegen die Ultraschallmessköpfe 4, 4' einander diametral gegenüber, dann steht auch der Bezugsdurchmesser (genauer der Abstand des virtuellen Schallursprungs 12 des Ultraschallmesskopfes 4 zum virtuellen Schallursprung 12' des gegenüberliegenden Ultraschallmesskopfes 4') fest, denn dieser Abstand entspricht der Summe aus D5 + D'5 + D1. D'5 ist dabei der Abstand des virtuellen Schallursprungs 12' von der Außenmantelfläche des Referenzdornes 5.

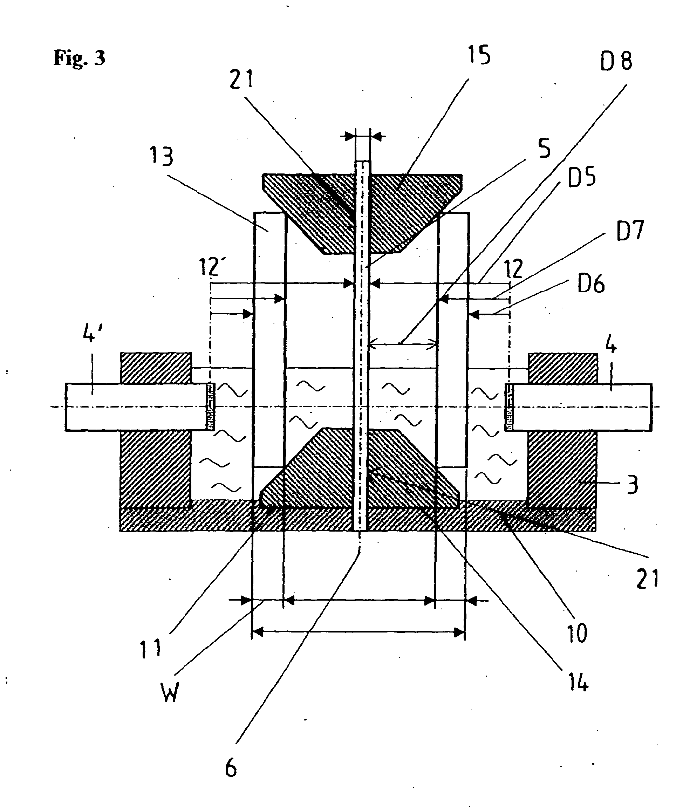

Zum Vermessen eines Prüfmusters 13 wird die Halterung 8 zusammen mit dem darin eingesetzten Hilfsdorn 7 oder den darin eingesetzten Hilfsdornen 7 entfernt, indem sie nach oben aus der Messkammer 2 herausgezogen wird. Dabei gleitet der Referenzdorn 5 durch die Bohrung 9. Im Anschluss daran wird eine Halterung 14 mit einer zentralen Bohrung 21 auf den Referenzdorn 5 aufgesetzt und so weit heruntergeschoben bis sie in der Vertiefung 11 zu liegen kommt; diese Situation ist in der Figur 3 gezeigt. Diese Halterung 14 besitzt eine in etwa trapezförmige Querschnittsform und ist rotationssymmetrisch zur Messachse 6 ausgebildet. Dann wird das Prüfmuster 13 mit einem seiner Enden auf die Halterung 14 aufgesetzt, und zwar auf die konisch zulaufenden Seitenflächen des genannten Trapezes. Dadurch findet eine Zentrierung des Prüfmusters um die Messachse 6 statt, so dass es in etwa konzentrisch dazu verläuft. Desweiteren wird dann auf das obere Ende des Prüfmusters 13 eine der Halterung 14 entsprechende obere Halterung 15 umgekehrt auf das Prüfmuster 13 und den Referenzdorn 5 aufgesetzt.

Bei der anschließend durchgeführten Ultraschallvermessung werden die Laufzeiten $t'_{D5}$, $t'_{D6}$ und $t'_{D7}$ bei eingelegtem Prüfmuster für die Abstände D5, D6 und D7 gemessen. Der Bezugsabstand D5 als Längenmaß ist aus der Kalibrierung bekannt. Die Schallgeschwindigkeit im zur Anwendung gebrachten Wasser wurde bestimmt, kurz bevor das Prüfmuster in die Vorrichtung 1 eingesetzt und in das Wasser eingetaucht wurde. Diese Schallgeschwindigkeit beträgt

$$v_w = D5/t_{D5}.$$

Die Schallgeschwindigkeit im Wasser kann übrigens auch nach Durchführung der Messungen mit eingesetztem Prüfmuster 13 erfolgen.

Die Wasserstrecken beim eingelegten Prüfmuster 13 errechnen sich dann wie folgt:

$$D6 = v_w \cdot t'_{D6} = D5 \, (t'_{D6}/t_{D5})$$

$$D8 = D5 - D7 = v_w \, (t'_{D5} - t'_{D7})$$

$$= D5 \, [(t'_{D5} - t'_{D7})] \, t_{D5})$$

Die Wandstärke w des Prüfmusters 13 ergibt sich dann als

$$W = D5 - (D8 + D6).$$

D8 ist dabei der Abstand von der Außenmantelfläche des Referenzdornes 5 zur gegenüberliegenden Innenmantelfläche des Prüfmusters 13.

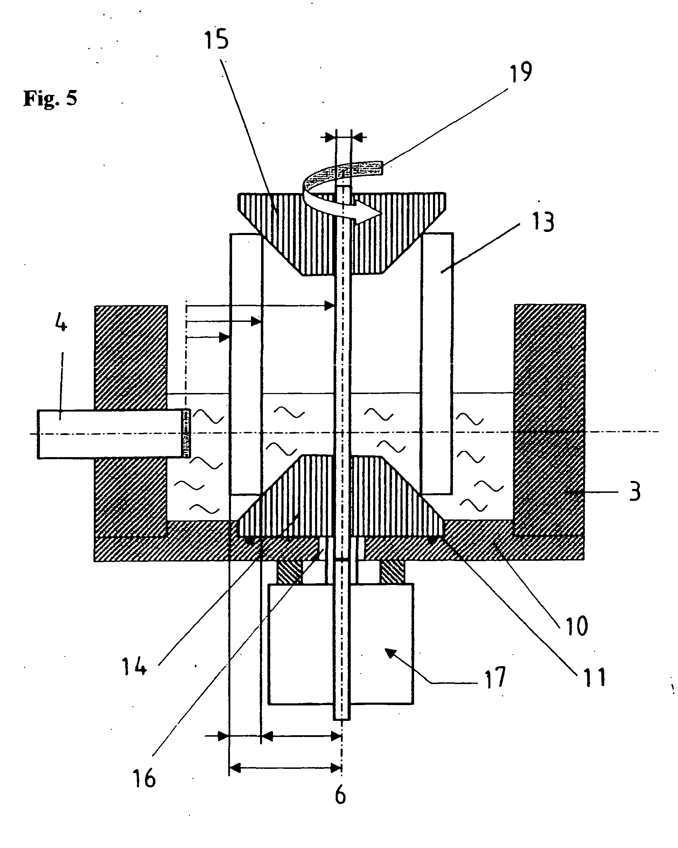

Bei der in der Figur 5 gezeigten Ausführungsform sind die Halterung 14 und die obere Halterung 15 um die Messachse 6 drehbar ausgestaltet und gelagert. Dies ist mit dem Pfeil 19 angedeutet. Zu diesem Zweck wird der Referenzdorn 5 durch den Boden 10 hindurchgeführt und von einem unterhalb des Bodens 16 angeordneten Motor 17 gedreht, der mit einem Winkelgeber ausgestattet ist. Auf diese Weise kann das Prüfmuster 13 mit nur einem Ultraschallmesskopf 4 an seinem gesamten Umfang vermessen werden.

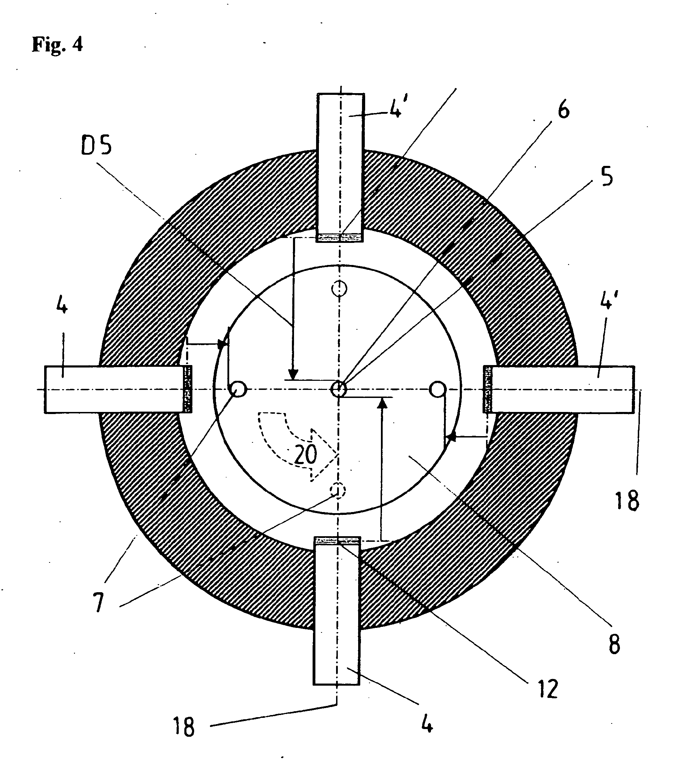

Figur 4 zeigt eine Aufsicht auf eine erfindungsgemäße Vorrichtung mit zwei Paaren von Ultraschallmessköpfen 4, 4', die im Winkel von 90° um den Referenzdorn 5 angeordnet sind. Mit anderen Worten, die Verbindungslinien 18 dieser beiden Paare von Ultraschallmessköpfen 4, 4' stehen senkrecht aufeinander. Die scheibenförmige Haltevorrichtung 8 ist um die Messachse 6 und auch um den Referenzdorn 5 drehbar und mit zwei Hilfsdornen 7 ausgestattet. Durch Drehen der Haltevorrichtung 8 entsprechend dem Pfeil 20 sind die Hilfsdorne 7 aus der mit einer durchgezogenen Linie dargestellten Position zwischen den Ultraschallmessköpfen 4, 4' in eine Position zwischen das andere Paar von Ultraschallmessköpfen 4, 4' bringbar. Diese Position ist mit gestrichelten Linien dargestellt. Nach Durchführung der zuvor beschriebenen Kalibrierung wird die Haltevorrichtung 8 entnommen und durch die Halterung 14, 15 für das Prüfmuster 13 ersetzt.

Bei allen oben beschriebenen Vorrichtungen 1 sind die Ultraschallmessköpfe 4, 4' mit einem Signalprozessor verbunden, welcher die gemessenen Signale auswertet und in Distanzen umrechnet. Die Messresultate können über eine geeignete Schnittstelle einem Rechner zugeführt werden, der als "User Interface" dient.

Mit Hilfe der erfindungsgemäßen Vorrichtung ist es - wie oben beschrieben - möglich, die Wandstärke des Prüfmusters exakt zu ermitteln, und zwar unabhängig von der Art des Materials des Prüfmusters. Erfindungsgemäß ist es auch möglich, Prüfmuster zu vermessen, die aus zwei oder mehr Schichten bzw. Materialien bestehen. So weisen beispielsweise Zahnpastatuben und Benzinschläuche zwei oder mehrere Funktionsschichten auf.

Die totale Wandstärke dieser Prüfmuster kann genau und materialunabhängig festgestellt werden. Sofern die Schallgeschwindigkeit in den einzelnen Materialien eines mehrschichtigen Prüfmusters bekannt ist, kann mit der erfindungsgemäßen Vorrichtung auch die einzelne Wandstärke bzw. Schichtdicke genau ermittelt werden. Sofern die angenommene Schallgeschwindigkeit für ein bestimmtes Material nicht exakt zutrifft, ist gegebenenfalls die auf die erfindungsgemäße Weise ermittelte einzelne Schichtdicke nicht zutreffend. Da jedoch die totale Wandstärke materialunabhängig ermittelt wird, drückt sich dieser Fehler allenfalls in einem nicht zutreffenden Verhältnis der verschiedenen Wandstärken bzw. Schichtdicken aus.

**Bezugszeichenliste**

**Stand der Technik**

| T1, T2 | Ultraschallköpfe |
|--------|------------------|
| T3 | Elektronikeinrichtung |
| T4 | rohrförmiges Prüfmuster |
| T5 | Wasser/Kopplungsmedium |
| T6 | Zentriervorrichtung |
| T7 | Temperaturfühler |

**Erfindungsgemäße Vorrichtung**

| 1 | Vorrichtung |
|---|-------------|
| 2 | Messkammer |
| 3 | Seitenwand |
| 4, 4' | Ultraschallmesskopf |
| 5 | Referenzdorn |
| 6 | Messachse |
| 7 | Hilfsdorn |
| 8 | scheibenförmige Haltevorrichtung |
| 9 | Bohrung |
| 10 | Boden |
| 11 | Vertiefung |
| 12 | virtueller Schallursprung |
| 13 | Prüfmuster |
| 14 | Halterung, untere |
| 15 | Halterung, obere |
| 16 | Bodenbohrung |
| 17 | Motor |
| 18 | Verbindungslinie |
| 19 | Pfeil |
| 20 | Pfeil |
| 21 | zentrale Bohrung |
| | |
| D1 | Durchmesser Referenzdorn 5 |
| D2 | Durchmesser Hilfsdorn 7 |
| D3 | Abstand/Strecke Außenmantelfläche Referenzdorn 5, zur Außenmantelfläche Hilfsdorn 7 auf der zum Ultraschallmesskopf 4 zeigenden Seite |

| D4 | Abstand/Strecke Außenmantelfläche Hilfsdorn 7 zum gegenüberliegenden virtuellen Schallursprung 12 |
|---|---|
| D5, D5' | Abstand/Strecke Außenmantelfläche Referenzdorn 5 zum virtuellen Schallursprung 12 |
| D6 | Abstand/Strecke Außenmantelfläche Prüfmuster 13 zum gegenüberliegenden virtuellen Schallursprung 12 |
| D7 | Abstand/Strecke vom virtuellen Schallursprung 12 zur zum Referenzdorn 5 zeigenden Innenmantelfläche des Prüfmusters 13 |
| D8 | Abstand/Strecke Außenmantelfläche Referenzdorn 5 zur gegenüberliegenden Außenmantelfläche des Prüfmusters 13 |
| W | Wandstärke des Prüfmusters 13 |

**Patentansprüche**

1. Vorrichtung zur Ultraschallvermessung von rohrförmigen und schlauchförmigen Prüfmustern (13), die mit Wasser gefüllt oder in ein Wasserbad getaucht werden kann und mit mindestens einem an der Vorrichtung (1) gehalterten Ultraschallmesskopf (4, 4') und einem zylindrischen Hilfsdorn (7) ausgestattet ist,
**dadurch gekennzeichnet, dass**
die Vorrichtung mit einem zylindrischen Referenzdorn (5) mit einem bekannten Durchmesser ausgestattet ist, dessen Längsachse mit der Messachse (6) der Vorrichtung (1) zusammenfällt
der zylindrische Hilfsdorn (7) sich parallel zum zylindrischen Referenzdorn (5) erstreckt und in eine Position zwischen dem Ultraschallmesskopf (4, 4') und dem Referenzdorn (5) bringbar und aus dieser Position auch wieder entfernbar ist und
Halterungen (14, 15) mit zentralen Bohrungen (21) vorhanden sind, die auf den Referenzdorn (5) aufgeschoben werden können und zur Fixierung des ebenfalls auf den Referenzdorn (5) aufgeschobenen Prüfmusters (13) dienen und das Prüfmuster (13) derart zentrieren, dass die Längsachse des Prüfmusters (13) mit der Messachse (6) und auch der Längsachse des Referenzdornes (5) zusammenfällt.

2. Vorrichtung nach Anspruch 1,
**dadurch gekennzeichnet,**
**dass** 2, 3, 4 oder mehr Ultraschallmessköpfe (4, 4') vorhanden sind.

3. Vorrichtung nach Anspruch 1,
**dadurch gekennzeichnet,**
**dass** eine gerade Zahl von Ultraschallmessköpfen (4, 4') vorhanden ist, von denen sich jeweils 2 diametral bezüglich der Messachse (6) auf einer Achse (18) gegenüberstehen.

4. Vorrichtung nach einem der vorhergehenden Ansprüche,
**dadurch gekennzeichnet,**
**dass** der Hilfsdorn (7) zwischen alle vorhandenen Ultraschallmessköpfe (4, 4') und dem Referenzdorn (5) bringbar ist.

5. Vorrichtung nach Anspruch 4,
**dadurch gekennzeichnet,**
**dass** der Hilfsdorn (7) auf einer Kreisbahn um die Mittelachse (6) verschwenkbar ist.

6. Vorrichtung nach Anspruch 2,
**dadurch gekennzeichnet,**
**dass** pro Ultraschallmesskopf (4, 4') jeweils ein Hilfsdorn (7) vorhanden ist.

7. Vorrichtung nach einem der vorhergehenden Ansprüche,
**dadurch gekennzeichnet,**
**dass** der Hilfsdorn (7) oder die Hilfsdorne (7) entfernbar ist/sind und eine Halterung (14, 15) für das Prüfmuster (13) in die Vorrichtung (1) einsetzbar ist.

8. Vorrichtung nach einem der vorhergehenden Ansprüche,

**dadurch gekennzeichnet,**
**dass** sie mit einem Signalprozessor und/oder einem Rechner ausgestattet ist.

9. Verfahren zur Ultraschallvermessung von zylindrischen Prüfmustern (13), insbesondere Rohren und Schläuchen, in Wasser, bei dem man ein zylindrisches Prüfmuster mit einem Ultraschallsignal aus mindestens einem Ultraschallmesskopf (4, 4') in einer Vorrichtung (1) zur Ultraschallvermessung vermisst,
**gekennzeichnet durch** eine Kalibrierung der Vorrichtung (1) und eine Vermessung des Prüfmusters (13), wobei die Kalibrierung folgende Stufen:

a) in der Vorrichtung (1) wird ein zylindrischer Hilfsdorn (7) mit einem bekannten Durchmesser in eine Position zwischen dem Ultraschallmesskopf (4, 4') und einem zylindrischen Referenzdorn (5) mit bekanntem Durchmesser, dessen Längsachse mit der Messachse (6) der Vorrichtung (1) zusammenfällt, gebracht,
b) der Abstand D3 von der zum Ultraschallmesskopf (4, 4') zeigenden Außenmantelfläche des Hilfsdornes (7) zur Außenmantelfläche des Referenzdornes (5) wird auf per se bekannte Weise, beispielsweise mechanisch oder optisch, bestimmt, sofern dieser Abstand D3 nicht bekannt ist,
c) für den Abstand D5 vom Ultraschallmesskopf (4, 4') zum Referenzdorn (5) wird in Wasser bei entferntem Hilfsdorn (7) die Laufzeit für ein Ultraschallecho vermessen,
d) bei in der Position zwischen dem Referenzdorn (5) und dem Ultraschallmesskopf (4, 4') befindlichem Hilfsdorn (7) wird in Wasser die Laufzeit eines Ultraschallechos für den Abstand D4 vom Ultraschallmesskopf (4, 4') zur gegenüberliegenden Außenmantelfläche des Hilfsdornes (7) vermessen, und
e) unter Berücksichtigung der für die Abstände D4 und D5 gemessenen Laufzeitwerte und des Abstandwertes D3 wird der Abstand D5 von der Außenmantelfläche des Referenzdorns (5) zum virtuellen Schallursprungs (12, 12') im Ultraschallmesskopf (4,4') rechnerisch als Bezugsstrecke D5 als Längenmaß bestimmt,
und die Vermessung folgende Stufen:
f) unter Berücksichtigung der aus der Stufe e) bekannten Bezugsstrecke D5 vom virtuellen Schallursprung (12) zum Referenzdorn (5) wird die aktuelle Schallgeschwindigkeit des Wasser bestimmt, wenn sich kein Prüfmuster (13) in der Messvorrichtung befindet,
g) das Prüfmuster (13) wird derart in die Vorrichtung (1) eingesetzt, dass es möglichst konzentrisch um den Referenzdorn (5) umläuft,
h) für mindestens eine Grenzfläche des Prüfmusters (13) wird der Abstand dieser Grenzfläche zum virtuellen Schallursprung (12, 12') im Ultraschallmesskopf (4, 4') ein Ultraschallecho vermessen, und
i) aus den ermittelten Daten wird mindestens ein gewünschter Parameter des Prüfmusters (13) rechnerisch ermittelt, umfasst.

10. Verfahren nach Anspruch 9,
**dadurch gekennzeichnet,**
**dass** als gewünschter Parameter die Wandstärke W des Prüfmusters (13) ermittelt wird.

**Claims**

1. A device for the ultrasonic measuring of tube like and hose like test specimen (13) which is filled with water or can be submerged in a water bath and is provided with at least one ultrasonic measuring head (4,4') secured to the device (1) and with a cylindrical auxiliary mandrel (7)
**characterized in that**
the device is equipped with a cylindrical reference mandrel (5), the diameter of which is known and the longitudinal axis of which coincides of the measuring axis (6) of the device (1),
the cylindrical auxiliary mandrel (7) extends parallel to the cylindrical reference mandrel (5) and can be moved to a position between the ultrasonic measuring head (4,4') and the reference mandrel (5) and can also be removed again from this position and
holders (14,15) with central borings (21) are provided which can be slided on the reference mandrel (5) and are capable to locate the test specimen (13) being also slided on the reference mandrel (5) and center the test specimen (13) in such a way that the longitudinal axis of the test specimen (13) coincides with the measuring axis (6) and also the longitudinal axis of the reference mandrel (5).

2. Device according to claim 1,
**characterized in that**
2, 3, 4 or more ultrasonic measuring heads (4,4') are present.

**3.** Device according to claim 1,
**characterized in that**
an even number of ultrasonic measuring heads (4,4') are provided, of which respectively 2 are arranged diametrically opposite each other relative to the measuring axis (6) of an axis (18).

**4.** Device according to one of the preceding claims,
**characterized in that**
the auxiliary mandrel (7) can be moved to a position between all existing ultrasonic measuring heads (4,4') and the reference mandrel (5).

**5.** Device according to claim 4,
**characterized in that**
the auxiliary mandrel (7) can be pivoted along a circular part around the center axis (6).

**6.** Device according to claim 2,
**characterized in that**
respectively one auxiliary mandrel (7) is provided for each measuring head (4,4').

**7.** Device according to one of the preceding claims,
**characterized in that**
the auxiliary mandrel (7) or the auxiliary mandrels (7) can be removable and that a holder (14,15) for the test specimen (13) can be inserted into the device (1).

**8.** Device according to one of the preceding claims,
**characterized in that**
it is provided with a signal processor and/or a computer.

**9.** Method for the ultrasonic measuring in water of cylindrical test specimen (13), in particular tubes and hoses, wherein a cylindrical test specimen is measured with the aid of an ultrasonic signal, coming from at least one ultrasonic measuring head (4,4'), in a device (1) for the ultrasonic measuring,
**characeterized by**
a calibration of the device (1) and a measuring of the test specimen (13), wherein the calibration involves the following steps:

a) In the device (1) a cylindrical auxiliary mandrel (7) with a known diameter is moved to a position between the ultrasonic measuring head (4,4') and a cylindrical reference mandrel (5) with a known diameter, for which the longitudinal axis coincides with the measuring axis (6) of the device (1),
b) the distance D3 from the outside jacket surface of the auxiliary mandrel (7) that faces the ultrasonic measuring head (4,4') to the outside jacket surface of the reference mandrel (5) is determined in a manner known per se, for instance mechanically or optically, insofar as this distance D3 is not already known,
c) to obtain the distance D5 from the ultrasonic measuring head (4,4') to the reference mandrel (5) the transit time for an ultrasonic echo in water is measured while the auxiliary mandrel (7) is removed,
d) with the auxiliary mandrel (7) positioned between the reference mandrel (5) and the ultrasonic measuring head (4,4'), the transit time in water for an ultrasonic echo is measured to obtain the distance D4 from the ultrasonic measuring head (4,4') to the opposite-arranged outside jacket surface of the auxiliary mandrel (7), and
e) the distance D5 from the outside jacket surface of the reference mandrel (5) to the virtual sound origin (12,12') in the ultrasonic measuring head (4,4') is determined as length dimension, computed as reference distance D5, by taking into account the transit time values measured for the distances D4 and D5 and the distance value D3,

and the measuring operation involves the following steps:

f) If no test specimen (13) is positioned in the measuring device, then the actual sonic speed in water is determined by taking into consideration the reference distance D5, known from step e), from the virtual sound origin (12) to the reference mandrel (5),
g) the test specimen (13) is inserted din such a way into the device (1) that it is placed as concentric as possible around the reference mandrel (5),
h) an ultrasonic echo is measured for at least one boundary surface of the test specimen (13) to determine the distance between this boundary surface and the virtual sound origin (12,12') in the ultrasonic measuring head (4,4') and

i) at least one desired parameter for the test specimen (13) is then computed from the determined data.

**10.** Method according to claim 9,
characeterized in that
the wall thickness W of the test specimen (13) is determined as desired parameter.


**Revendications**

**1.** Dispositif d'inspection par ultrasons d'échantillons (13) en forme de tube ou de tuyau qui sont remplis d'eau ou peuvent être plongés dans un bain d'eau et qui sont équipés d'au moins une tête de mesure à ultrasons (4, 4') maintenue au dispositif (1) et d'une broche cylindrique auxiliaire (7),
**caractérisé en ce que**
le dispositif est équipé d'une broche cylindrique de référence (5) de diamètre connu dont l'axe longitudinal est confondu avec l'axe de mesure (6) du dispositif (1),
la broche cylindrique auxiliaire (7) s'étend parallèlement à la broche cylindrique de référence (5) et peut être amenée en une position entre la tête de mesure à ultrasons (4, 4') et la broche de référence (5) et qu'elle peut aussi en être ensuite ôtée et que des supports (14, 15) comportant des perçages centraux (21) figurent, qui peuvent être enfichés sur la broche de référence (5) et qui servent à fixer l'échantillon (13) également enfiché sur la broche de référence (5), centrant l'échantillon (13) de manière telle que l'axe longitudinal de l'échantillon (13) est confondu avec l'axe de mesure (6) ainsi qu'avec l'axe longitudinal de la broche de référence (5).

**2.** Dispositif selon la revendication 1,
**caractérisé en ce que**
figurent 2, 3, 4 têtes de mesure à ultrasons (4, 4') ou plus.

**3.** Dispositif selon la revendication 1,
**caractérisé en ce que**
figurent un nombre pair de têtes de mesure à ultrasons (4, 4'), dont chaque fois 2 se situent en face l'une de l'autre sur un axe (18), diamétralement par rapport à l'axe de mesure (6).

**4.** Dispositif selon l'une quelconque des revendications
précédentes, **caractérisé en ce que**
la broche auxiliaire (7) peut être amenée entre toutes les têtes de mesure à ultrasons (4, 4') existantes et la broche de référence (5).

**5.** Dispositif selon la revendication 4,
**caractérisé en ce que**
la broche auxiliaire (7) peut pivoter selon une trajectoire circulaire autour de l'axe médian (6).

**6.** Dispositif selon la revendication 2,
**caractérisé en ce que**
pour chaque tête de mesure à ultrasons (4, 4') figure une broche auxiliaire (7).

**7.** Dispositif selon l'une quelconque des revendications précédentes,
**caractérisé en ce que**
la broche auxiliaire (7) ou les broches auxiliaires (7) est / sont amovible/s et qu'un support (14, 15) pour l'échantillon (13) peut être disposé dans le dispositif (1).

**8.** Dispositif selon l'une quelconque des revendications précédentes,
**caractérisé en ce que**
celui-ci est équipé d'un processeur de signal et/ou d'un ordinateur.

**9.** Procédé d'inspection par ultrasons dans de l'eau d'échantillons (13) cylindriques, en particulier de tubes et de tuyaux, au cours duquel on inspecte un échantillon cylindrique avec un signal à ultrasons d'au moins une tête de mesure à ultrasons (4, 4') dans un dispositif (1) d'inspection par ultrasons,
**caractérisé par** un étalonnage du dispositif (1) et une inspection de l'échantillon (13), l'étalonnage comportant les étapes suivantes :

a) dans le dispositif (1), une broche cylindrique auxiliaire (7) de diamètre connu est placée en une position entre la tête de mesure à ultrasons (4, 4') et une broche cylindrique de référence (5) de diamètre connu dont l'axe longitudinal est confondu avec l'axe de mesure (6) du dispositif (1),

b) l'écartement D3 entre la surface d'enveloppe extérieure de la broche cylindrique auxiliaire (7) dirigée vers la tête de mesure à ultrasons (4, 4') et la surface d'enveloppe extérieure de la broche cylindrique de référence (5) est déterminée d'une manière connue en elle-même, par exemple mécaniquement ou optiquement, dans la mesure où cet écartement D3 n'est pas connu,

c) pour l'écartement D5 entre la tête de mesure à ultrasons (4, 4') et la broche de référence (5), la durée de parcours d'un écho d'ultrasons est mesurée dans l'eau, broche auxiliaire (7) ôtée,

d) pour la broche auxiliaire (7) se trouvant en la position entre la broche cylindrique de référence (5) et la tête de mesure à ultrasons (4, 4'), la durée de parcours d'un écho d'ultrasons est mesurée pour la distance D4 entre la tête de mesure à ultrasons (4, 4') et la surface d'enveloppe extérieure située en face de la broche cylindrique auxiliaire (7), et

e) en tenant compte des valeurs de durée de parcours mesurées pour les écartements D4 et D5 et la valeur d'écartement D3, l'écartement D5 entre la surface d'enveloppe extérieure de la broche de référence (5) et l'origine virtuelle du son (12, 12 ') dans la tête de mesure à ultrasons (4, 4') est déterminé par calcul en tant que trajet de référence D5 en tant que mesure de longueur,

et l'inspection les étapes suivantes :

f) en tenant compte du trajet de référence D5 connu de l'étape e) entre l'origine virtuelle du son (12) et la broche de référence (5), on détermine la vitesse actuelle du son dans l'eau lorsque aucun échantillon (13) ne figure dans le dispositif de mesure,

g) l'échantillon (13) est disposé de manière telle dans le dispositif (1) qu'il entoure de façon aussi concentrique que possible la broche de référence (5),

h) pour au moins une surface de délimitation de l'échantillon (13), l'écartement entre cette surface de délimitation et l'origine virtuelle du son (12, 12 ') dans la tête de mesure à ultrasons (4, 4') est mesurée par un écho d'ultrasons, et

i) au moins un paramètre souhaité de l'échantillon (13) est déterminé par calcul à partir des données déterminées.

10. Procédé selon la revendication 9,
**caractérisé en ce que**
l'épaisseur de paroi W de l'échantillon (13) est déterminée en tant que paramètre souhaité.

**Fig. 1**      **Stand der Technik**

**Fig. 2**

Fig. 3

**Fig. 4**

**Fig. 5**